# EUROPEAN PATENT SPECIFICATION

(11) **EP 1 514 443 B1**
(45) Date of publication and mention of the grant of the patent: **30.05.2007**
(21) Application number: 02735694.8
(22) Date of filing: 31.05.2002
(51) Int. Cl.: H04Q 7/38

(54) **ROUTING METHOD AND NETWORK STRUCTURE**
VERFAHREN ZUR LEITWEGLENKUNG UND NETZSTRUKTUR
PROCEDE D'ACHEMINEMENT ET STRUCTURE EN RESEAU

(43) Date of publication of application: 16.03.2005
(73) Proprietor: Nokia Corporation, 02150 Espoo (FI)
(72) Inventor: SERNA, Pedro, 29018 Malaga (ES); LONGONI, Fabio, 29017 Malaga (ES)
(74) Representative: Ungerer, Olaf
(86) International application number: PCT/IB2002/001960
(87) International publication number: WO 2003/103325

(56) References cited:
- NORTEL NETWORKS: "Iur-g with no user plane, Joint 3GPP TSG SA2-GERAN-RAN3,Tdoc GAHW-010134, Helsinki, Finland" JOINT 3GPP TSG SA2-GERAN-RAN3, TDOC GAHW-010134, [Online] 10 - 11 April 2001, pages 1-8, XP002237267 Helsinki, Finland Retrieved from the Internet: <URL:http://www.3gpp.org/ftp/tsg_geran/TSG _GERAN/AD-HOCs/Releases_4-5/Joint_Geran_R3 _S2_Apr_01/GAHW-010134.zip> [retrieved on 2003-04-01]
- ERICSSON: "Work Item Description for GERAN Intra Domain Connection of RAN Nodes to Multiple CN Nodes, TSG GERAN #8,Tdoc GP-020492,Rev. Tdoc GP-020360,Agenda item 6.6 and 7.2.5.1.4,Rome, Italy" TSG GERAN #8, [Online] 4 - 8 February 2002, pages 1-3, XP002237268 Rome, Italy Retrieved from the Internet: <URL:www.3gpp.org/ftp/Information/WI_Sheet /GP-020492.pdf> [retrieved on 2003-04-01] cited in the application
- ERICSSON: "Inter-RAT Iur-g issues,Tdoc GP-010640,Agenda item 7.2.5.7,Biarritz, France " 3GPP TSG GERAN #4, [Online] 2 - 6 April 2001, pages 1-6, XP002237269 Biarritz, France Retrieved from the Internet: <URL:http://www.3gpp.org/ftp/tsg_geran/TSG _GERAN/GERAN_04_Biarritz/Docs/GP-010640.zi p> [retrieved on 2003-04-01]

## Description

### FIELD OF THE INVENTION

The present invention relates to a routing method and to a data network system. It also relates to a network device for operation in a radio data network.

### BACKGROUND OF THE INVENTION

Modern radio data networks evolve towards network architectures that support packet-switched (PS) services and the internet Protocol (IP) in all instances from the mobile station to the core network. However, circuit-switched (CS) services will have to be supported as well since most subscribers use equipment that works according to previous CS standards like GSM.

Currently developing third generation project partnership (3GPP) communication network standards support both PS and CS data services. Their architecture and location and mobility management will be shortly reviewed in the following. This will lead to the problem underlying the present invention.

### a) General network architecture

A network according to these standards comprises a core network (CN), radio access networks (RAN), and mobile stations (MS) attached to a RAN. A RAN of a 3G-communication network may either comply with the Universal Terrestrial RAN (UTRAN) architecture of the Universal Mobile Telephony System (UMTS). Alternatively, a RAN of a 3G-communication network may comply with the GSM/EDGE Radio Access Network (GERAN) architecture. The GERAN architecture provides services comparable to the UTRAN architecture of UMTS while still supporting the pre-existing GSM (Global System for Mobile Communication) architecture.

### b) UTRAN architecture

In the UTRAN architecture the RAN is divided into a plurality of Radio Network Subsystems (RNS) each controlled by a Radio Network Controller (RNC). The RNC is a logical node in the RNS in charge of controlling the use and the integrity of the radio resources. Each RNC is connected to a set of Node B elements. A Node B element is the physical unit for radio transmission and reception in cells. The main task of the Node B element is the conversion of data to and from a Mobile station. A cell is a radio network object that can be uniquely identified by the Mobile station from a (cell) identification that is broadcast over a geographical area by the Node B element.

Inside the UTRAN, the RNCs of the Radio Network Subsystems can be interconnected together through lur interfaces. lur interfaces can be conveyed over a direct physical connection between RNCs or virtual networks using any suitable transport network.

The communication interface between the UTRAN and a connected Core Network (CN) is an lu interface. Depending on support of packet switched data or circuit switched data the lu interface will be an lu_{PS} or an lu_{CS} interface, respectively.

### c) GERAN architecture

In the general GERAN architecture, which much resembles the UTRAN architecture, the RAN is divided into a plurality of Base Station Systems (BSS) each controlled by a Base Station Controller (BSC). The function of a BSC resembles that of the RNC in a UTRAN. Each BSC is connected to a set of Base Transceiver Stations (BTS). The main task of the BTS is, like that of a Node B in a UTRAN, the conversion of data to and from the UE.

Inside the GERAN, the BSCs of the Base Station Subsystems can be interconnected together through lur-g interfaces. lur-g interfaces can be conveyed over a direct physical connection between BSCs or virtual networks using any suitable transport network.

Communication between a GERAN BSC and a UTRAN RNC is handled using an additional lur-g interface.

The GERAN architecture supports the lu interface to a connected CN but may alternatively also allow communication with the CN through A and Gb interfaces. The A interface is a connection point between a BSC and CN for circuit-switched connections. The Gb interface is a connection point between a BSC and CN for packet-switched connections. This allows a GERAN to offer packet-switched (PS) services in a PS domain using the lu and Gb interfaces as well as circuit-switched (CS) services in a CS domain using the A interface.

Since GERAN supports the lu interface between a RAN node and a Core Network node, a GERAN may connect to the same GSM/UMTS CN as a UTRAN.

### d) Core Network architecture

On the side of the CN a common PS-domain Core Network can be used for both mentioned types of Radio Access Networks (RAN), the GERAN and the UTRAN.

The term PS-domain refers the packet-switched data services introduced into GSM networks using a standardized overlay general packet radio service (GPRS) network. Packet-switched communication uses short bursts of information that use a channel only for a short period of time. Devices attached to the PS domain are assigned an IP (Internet Protocol)-type address and are always on. Data is sent to and from the address, routed using standardized protocols. The network is essentially an extension of Internet. Routers determine the path that each packet takes to its destination. Upon arrival, individual packets, which may be out of sequence, are put back into order by a packet assembler.

In the PS-domain a Serving GPRS Support Node (SGSN) keeps track of the location of an individual MS and performs security functions and access control. The SGSN is connected to the GERAN base station system through a Gb or lu_{PS} interface and/or to the UTRAN through an lu_{PS} interface.

In the CS-domain a Mobile-services Switching Center (MSC) controls the communication between the GERAN Base Station System (BSS) or a UTRAN RNS and the fixed networks.

The term CS domain refers to the circuit-switched signaling and to a switching network based on GSM. Circuit-switched communication sets up a limited-duration, continuous point-to-point connection, using a dedicated channel to transmit and receive data. As long as the channel is connected, no one else can use it; and the user must initiate a new connection each time data is sent or received.

The MSC provides a digital exchange able to perform all necessary functions needed to handle calls to and from mobile subscribers located in the MSC area, such as registration, authentication, location updating, handovers, and call routing to a roaming subscriber. Specifically, the MSC provides the call handling necessary to cope with the mobile nature of the subscribers, e.g. paging. A MSC is connected to a GERAN BSS through an A interface and to a UTRAN RNS through an lu_{CS} interface.

In order to enhance the network performance recent lu communication interfaces allow an Intra-domain connection of RAN nodes to multiple Core Network (CN) nodes. That is, in a GERAN or in a UTRAN a BSC or a RNC, respectively, may connect to multiple CN nodes. The term "intra-domain connection" refers to a connection between RAN nodes and CN network nodes within a PS-domain or within a CS-domain, respectively. This mode of interface operation is called luflex. The Intra Domain Connection of RAN Nodes to Multiple CN Nodes provides a routing mechanism (and other related functionality), which enables the RAN nodes to route information to different CN nodes within the CS or PS domain, respectively.

In addition, in network systems supporting luflex, pool areas are formed of a plurality of RAN node service areas. The term pool area refers to an area within which a MS may roam without need to change the serving CN node, i.e. the serving SGSN or the serving MSC. The pool-areas of the CS and of the PS domain are configured independently with the granularity of RAN node service areas. A luflex pool area may be served by one CN node or by a plurality CN nodes in parallel. All the cells controlled by a RAN node (RNC or BSC) belong to the same one (or more) pool area(s).

### e) Location and Mobility Management

Mobility Management (MM) activities are needed for attachment, detachment and for location updates. As a MS attached to a RAN moves from one cell to another, it has to be ensured that the connection to the MS is maintained. As the MS moves, tracking of its position is performed using location management functions. Tracking may be performed on the cell level, the level of a Routeing Area (RA) containing several cells, or on the level of the Service area containing several RAs.

The MM activities depend on the mode the MS is operated in. For instance, two basic operational Radio Resource Control (RRC) modes of a GERAN MS are *idle* mode and *connected mode.* The connected mode can be further divided into service states, which define what kind of physical channels the MS is using. For instance, the MS may be in in a GRA_PCH state. In this state the MS monitors a paging channel (PCH) and can be located by the MSC with the resolution of a GERAN Registration Area. A rregistration area is an area in which a MS may roam without a need to perform location registration. In that case, the user does not need to signal every cell change but still keeps its Radio Resource Control (RRC) context (RRC connection), while it would loose it by moving to the IDLE state.

Location with higher resolution down to the cell level is performed by the GERAN. An MS in a RRA_PCH state is said to be camping on a cell. This state will hereinafter also be named more generally a RRA_PCH state, since for a UTRAN MS there is a corresponding URA_PCH state. URA refers to a UTRAN Registration Area. RRA means Radio Registration Area, be it a GRA or URA.

Location management provides mechanisms, among others, for cell selection. One important class of location management procedures comprises handover procedures. A handover is a process in which the RAN changes the radio transmitters or the radio access mode to provide bearer services maintaining a defined service level. Handover may be initiated by the network based on radio frequency (RF) criteria as measured by the MS or the Network (signal level, Connection quality, power level propagation delay) as well as traffic criteria (e.g. current traffic loading per cell, interference levels, maintenance requests, etc.).

There are two types of handover: hard handover and soft handover. A hard handover is a category of handover procedures where all existing radio links in the MS are abandoned before new radio links are established. Soft handover is a category of handover procedures where radio links are added and abandoned in such a manner that the MS always keeps at least one radio link to the RAN. Soft handovers may fully be performed within the RAN, without involving the core network. For instance, a MS moving from a first cell towards a second cell may have to communicate with two or more Node B nodes to ensure maintenance of the connection. A soft handover may be performed as soon as a certain Node B node is not anymore necessary to keep up the radio link of the MS to the RAN.

Relocation procedures may or may not involve a radio handover. An SRNS relocation procedure moves the lu reference point between the CN and the RAN on the RAN side from a first RNC to a second RNC. Before relocation, the first RNC is the Controlling RNC (CRNC) or Serving RNC (SRNC) while the RNC of the second cell is a Drift RNC (DRNC). The function of the DRNC is controlled by the SRNC using the lur interface. Corresponding terms are used for the GERAN (SBSC, DBSC). By relocation, the role of the serving RNC (SRNC) in relation to a mobile station moves from the first to the second RNC.

In the following, a problem arising from the present network architecture will be addressed.

The increased flexibility of the luflex funcionality introduces problems that have not been solved to date, for instance in CS paging. Paging a MS for circuit-switched services is executed by an MSC. A paging request is sent from the MSC to the BSC serving the MS. The BSC translates the incoming paging request message into one radio paging request message per cell. In case of an IMSI paging message the MSC uses in the paging message the International Mobile Subscriber Identity (IMSI) of the user as the user identification. IMSI paging is mostly used when the MSC does not have knowledge of the Temporary Mobile Station Identity (TMSI) that is normally used for paging.

In a GERAN or UTRAN, however, that implements the luflex functionality, in a CS paging procedure, the serving MSC sends a paging request to a serving BSC/RNC (SBSC) that already may have a PS signalling connection to the MS. The SBSC sends the paging request via an lur-g interface to drifting BSC/RNCs (DBSCs/DRNCs) that control the cell in the RRA (URA/GRA) the MS is registered. The DBSC sends the request to further BTSs in the pool area.

In case the MS is not attached to one cell, i.e., an lupc connection of a Standalone A-GPS SMLC (SAS) and the SRNC is in a URA/GRA (RRA) paging state, the paging is sent to the whole paging area that may include other BSCs/RNCs, and the lu-r interface. A Standalone A-GPS SMLC (SAS) is a logical node that provides GPS related data to the RNC and may perform a position calculation (pc) function. The lupc interface is a logical interface for the interconnection of a SAS and RNC components of the UTRAN.

When the MS is in an Idle mode, i.e., the MS is switched on but does not have any established Radio Resource Control (RRC) connection, upon receipt of a Paging Request message for a circuit-switched service the MS may accept to respond to this request. After establishing a RRC connection, known CS procedures will be followed for the paging response. When received at the BSS, the Paging Response message is to be routed to the MSC.

In this case, the serving BSC/RNC may store the CN identity of the MSC originating the paging request so that the response from paging returns to the correct CN. In general, however, the RRA spans more than one BSC. If the paging response is routed through a BSC/RNC in a pool area different from the SBSC, and relocation is triggered to that RNC/BSC, the routing path for the paging response will be changed, compared to the routing path for the paging request. After changing the routing path, the originating CN will be unknown to the radio access network nodes and core network nodes involved. In this case, therefore, the paging response will not arrive at the originating CN.

A solution to the paging problem is presented (Joint 3GPP TSG SA2-GERAN-RAN3, Tdoc GAHW-010134, Helsinki, Finland, 10.-11.4.2001, Agenda item: 4.2, available at http://www.3gpp.org/ftp/tsg_geran/TSG_GERAN/AD-HOCs/Releases_4-5/Joint_Geran_R3_S2_Apr_01/GAHW-010134.zip). It suggests to forward the paging response to the originating MSC before performing the relocation.

A recent solution approach to such paging issues suggests including the MSC/VLR (Visitor Location Register) identity in a CS paging message (3GPP, TSG GERAN #8 Tdoc GP-020492, Rev. Tdoc GP-020360 Rome, Italy February 4-8 2002 Agenda item 6.6 and 7.2.5.1.4, available at www.3gpp.org/ ftp/Information/WI_Sheet/ GP-020492.pdf). By this method, the MS will know the address of the originating CN and can, after suitable extraction from the paging message, include this address into the signaling with the new SRNC/BSC after relocation.

However, by including this additional information element in paging messages the data load transported back and forth between the MSC requesting the paging and the MS will be increased. Also, additional procedures are necessary that allow the MS to extract the identity from the paging message. This requires costly updating of the software of the mobile stations subscribing to a network implementing the solution mentioned above.

### SUMMARY OF THE INVENTION

It is therefore an object of the present invention to provide a network system and a simple method allowing to change a routing path between a first data network and a mobile station attached to a second data network that keeps necessary additional data traffic in the networks involved at a low level. It is another object of the present invention to provide a network system and a method that allow changing a routing path between a first data network and a mobile station attached to a second data network without involving the mobile station in the pertaining signaling.

Furthermore, it is an object of the present invention to provide a network device for operation in a radio data network that allows a change of the routing path between a first data network and a mobile station attached to a second data network without losing track of a network node in the first data network involved in the previous routing path.

These objects are achieved by a method according to claim 1, a data network system according to claim 21, and a network device according to claim 32, respectively.

According to the method of the invention, the routing path between a first data network and a mobile station attached to a second data network is changed. Before the change the routing path comprises at least one first network node in the first data network, a second network node communicating with the first network node, a third network node communicating with said second network node, and the mobile station. After the change the routing path comprises the first network node, the third network node communicating with said first network node and the mobile station.

According to the method of the present invention the described change of the routing path is performed, wherein a step of transferring an information element from said second network node to said third network node is taken, said information element comprising an identification element of said first network node.

The mentioned order of the network nodes does not necessarily reflect the direction of the actual routing. In paging and subsequent paging response, for instance, the paging message will originate at, or first pass, the first network node, and then pass through the second and third network nodes to finally reach the mobile station. The paging response, however, will originate at the mobile station and end at the first network, in opposite order to the order mentioned above. Thus, both routing paths before and after the change, according to the invention, may be used in both directions, from the mobile station to the first network node, or from the first network node to the mobile station.

It is noted, however, that the best use is made of the invention in situations when the order of the routing stations is followed as in the paging/paging response example given above.

The change of the routing path allows reducing signaling within the second data network that was necessary before the change. The third network node in the second data network will be able to communicate directly with the first network node in the first data network, without requiring control or the additional routing station of the second network node. This gain in signaling capacity corresponds to that achieved by known relocation methods. However, known relocation methods are not able to cope with the situation of CS IMSI paging to a mobile station for which an lu signaling connection already exists in a network system supporting luflex. Paging coordination is now possible in the above scenario.

By applying the invention it is now possible to rout a paging response message from a CS-paged mobile station back to the first network node originating the paging request also in a network system that supports luflex. Furthermore, the RRA can span more than one RNC/BSC, and interworking between UTRAN and GERAN is possible. This is because the third network node receives, in the form of an information element, the CN node identification of the first network note that originated the paging, and will use it for routing the paging response back to the first network node.

In a preferred embodiment of the method of the invention the information element containing the identification of the first network node is transferred directly from said second network node to said third network node. This is under most circumstances the shortest path possible.

In an alternative preferred embodiment, the information element is transferred from said second network node to at least one fourth network node in said first data network and then from said fourth network node to said third network node.

Both alternative embodiments mentioned allow to perform the step of transferring the identification of the first network node using known control messages by mere addition of the information element, or even more simply by adding the first-network-node id.

In the second alternative embodiment, said fourth network node in the first data network preferably has a serving-network-node function for the second network node. By a serving-network-note function of a network node in the first network the functionality corresponding to that of a SGSN in a core network is meant. An SGSN has a serving-network-node function for the RAN nodes in its service area regarding connections of MS served by these RAN nodes.

The fourth network node may keep the role of a serving network node after the change. This applies especially in network systems supporting luflex, because here several SGSNs serve a RAN node pool area in parallel.

However, in another embodiment of the method of the invention, the serving-network-node function of the fourth network node for the second network node regarding the connections of the MS is transferred to a fifth network node that will take the role of serving-network node for the third network node regarding the connection of the MS. Therefore, in this embodiment, the information element is transferred from the second network node to at least one fourth network node in the first data network, then from the fourth network node to a fifth network node in said first data network, and the from said fifth network node to the third network node.

In a preferred embodiment of the method of the invention said first network node is related to a packet-switched domain of said first network and said fourth and fifth network nodes are related to a circuit-switched domain of said first network, or vice versa. In this case, the method of the invention has the advantage of allowing to route a paging response to a paging request from the packet switched domain back to the CS network node from which the paging request originated, while keeping a control session in the PS domain. The lu connection is assumed to exist to PS domain and there is paging from CS domain, but all that is said here is also applicable when swapping the domains.

In a further preferred embodiment, said second network node has a serving-network-node function in the second data network for the mobile station before the change of the routing path, and said third network node has a serving-network-node function in said second data network for the mobile station after said change. The serving-network-node function meant here corresponds to that of a Serving Radio Network Controller (SRNC) or Serving Base Station subsystem Controller (SBSC) in a UTRAN or GERAN, respectively. Thus, the method of the present embodiment may include a relocation procedure such as a SRNS relocation procedure. Accordingly, the third network node may in a further embodiment have a drift-network-node function before said change that corresponds to that of a drift RNC or drift BSC in a UTRAN or GERAN.

Most preferably a plurality of first and/or fourth and/or fifth network nodes communicates in parallel with said second network node before said change, and with said third network node after said change. This is for instance the case in luflex operation of network systems. The service provision by multiple CN nodes within a pool-area enlarges the served area compared to the service area of one CN node. This results in reduced inter CN node updates, handovers and relocations and it reduces the HLR (Home Location Register) update traffic. The configuration of overlapping pool-areas allows to separate the overall traffic into different MS moving patterns, e.g., pool-areas where each covers a separate residential area and all the same city center. Other advantages of multiple CN nodes in a pool-area are the possibility of capacity upgrades by additional CN nodes in the pool-area or the increased service availability as other CN nodes may provide services in case one CN node in the pool-area fails.

Preferably, the method of the invention includes a further step of (temporarily) saving said information element or said identification element to a data storage device communicating with said second network node before said step of transferring said information element to said third network node. Saving the identification element is necessary only when a paging request is received by the second network node, especially an IMSI paging request in the situation described above. In other cases the originating network node will be clearly indicated by the connection, for instance, with an SGSN.

A further embodiment includes an additional step of (temporarily) saving said information element or said identification element to a data storage device communicating with the third network node after the step of transferring the information element to the third network node.

The method is most preferably applied in network systems, where said second data network is a radio data network, especially a radio access data network connected to a core network. In this embodiment, the second data network comprises preferably a GERAN or a UTRAN.

The method may be applied in situations where said second network node is related to the GERAN and said third network node is related to the UTRAN, or vice versa. In that case the second network node is a BSC and the third network node is a RNC, or vice versa.

The method of the invention is most preferably used during routing of response data to request data from the mobile station to the first network node. The request data originate at said first network node in the first data network. The said request data will have been routed along the routing path mentioned above before said change. The response data will according to this use of the invention be routed along said routing path after the change.

Further advantageous developments are defined in the dependent claims.

### BRIEF DESCRIPTION OF THE DRAWINGS

In the following, the present invention will be described in greater detail based on a preferred embodiment with reference to the drawings figures, in which:
Fig. 1 shows in the form of a schematic diagram a network system according to the invention; and
Fig. 2 shows in the form of a schematic diagram a procedure for routing a paging message according to the invention.

### DESCRIPTION OF THE PREFERRED EMBODIMENT

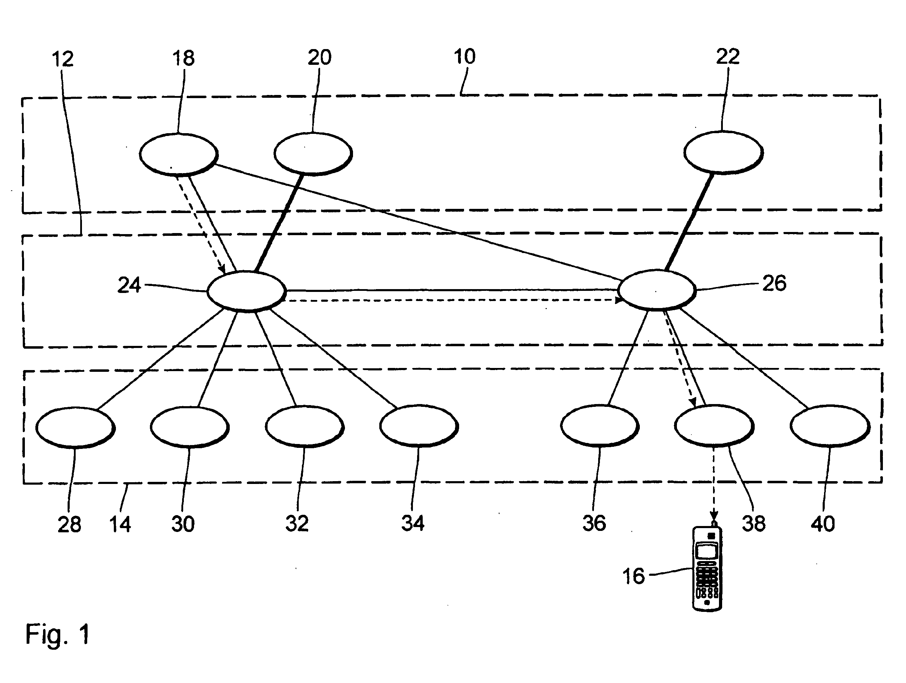

A first preferred embodiment will now be described on the basis of a network structure according to Fig. 1.

The network structure of Fig. 1 has a core network 10, a radio access network (RAN) 12 of GERAN (e.g., GERAN release 5 or higher) type, and a GERAN Registration area (GRA) 14 to which a mobile station (MS) 16 is attached. GRA 14 will in the following also be addressed by the more general term Radio Registration Area (RRA).

Core network 10 comprises an MSC 18 and a first a second SGSN 20 and 22, respectively. It is noted that CN 10 may comprise additional network nodes; which are omitted in Fig. 1 for reasons of simplicity. MSC 18 controls the CS-domain connections for MS 16. MSC 18 provides a digital exchange able to perform all necessary functions needed to handle calls to and from mobile station 16, such as registration, authentication, location updating, and handovers. Specifically, MSC 18 provides the call handling necessary to cope with the mobile nature of MS 16, e.g. paging.

SGSNs 20 and 22 provide similar services to MS 16 in the PS-domain as MSC 18 does in the CS-domain. Especially, SGSNs 20 and 22 keep track of the location of MS 16 and perform security functions and access control. Since the network structure of Fig. 1 supports luflex functionality SGSNs 20 and 22 may serve several RAN nodes in parallel in the PS domain.

GERAN 12 comprises two BSCs 24 and 26. Both BSCs 24 and 26 are in charge of controlling the use and the integrity of the radio resources for mobile subscribers in RRA 14. They cooperate with core network nodes and transceiver stations in RRA 14 in establishing, maintaining and releasing a connection for MS 16.

Each BSC is connected to a set of BTSs in RRA 14. BSC 24 is connected to BTSs 28 to 34 through Abis interfaces, BSC 26 is connected to BTSs 36, 38, and 40, through Abis interfaces as well. BTSs 28 to 34 form a service area for BSC 24, BTSs 36 to 40 form a service area for BSC 26. The BTSs 28 through 40 provide radio transmission and reception in cells. They may be adapted for IP operation. Their main task is the conversion of data to and from MS 16. RRA 14 forms a luflex pool area for a CS domain served number of transceiver stations grouped in an area within which a MS may roam without need to change the serving CN node, i.e. the serving SGSN or the serving MSC. The pool-areas of the CS and of the PS domain are configured independently with the granularity of RAN node service areas.

Inside GERAN 12 the BSCs 24 and 26 are interconnected together through an lur-g interface. Both BSCs are connected to MSC 18 through an A interface. They are connected to SGSNs 20 and 22, respectively, through a Gb or an lu_{PS} interface each.

For the embodiment of Fig. 1 it is assumed that MS 16 is camping on a cell under BSC 26, which takes the role of a drift BSC. The serving BSC of MS 16 is assumed to be BSC 24. The control connection of MS 16 is assumed to be in the PS domain. Thus, serving BSC 24 is connected to the PS domain of CN 10 through an lu interface. Serving BSC 24 and drift BSC 26 are connected through the lur-g interface. That is, since the network structure of Fig.1 supports luflex, SGSN 20 or both SGSNs 20 and 22 in parallel serve RAN node 24.

It is further assumed that MS 16 is operated in the RRA_PCH mode. In that mode, the user monitors a paging channel (PCH). The RAN 12 knows the position of the mobile with the accuracy of the registration area (RRA) 14 only. The exact cell the user is camping on is not known since in this mode the MS 16 does not need to signal every cell change. In this state MS 16 has only a logical connection towards serving 24 BSC but is not consuming any physical resources.

It is noted that the assumptions above are made for the purposes of explaining the invention in the context of a simple example. The invention is applicable in other circumstances as well. For instance, the control connection of the RAN to the CN could be in the CS domain. Also, either the drift BSC or the serving BSC, or both, could be a RNC.

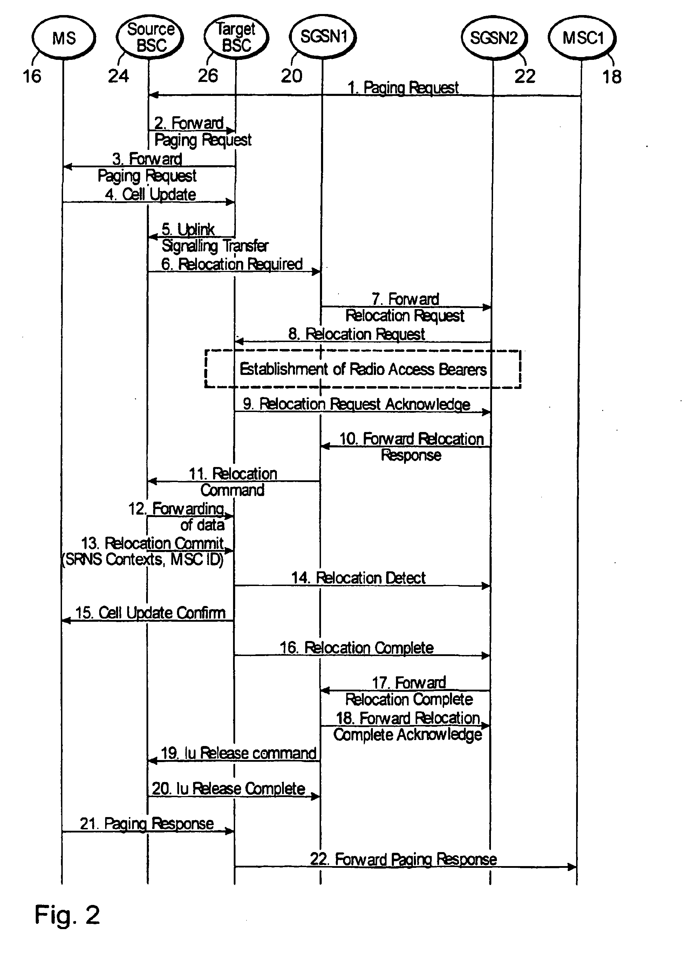

With reference to both figures 1 and 2 it will be explained in the following how the network system of Fig. 1 handles a paging request from the CS domain. For simplification, the lu connection is assumed to exist to PS domain and there is paging from CS domain, but all that is said here is also applicable when swapping the domains.

When in the above situation a paging occurs to MS 16 from the CS domain, MSC 18 sends a CS paging request to serving BSC 24 (step 1 in Fig. 2). The paging request may be an IMSI (International Mobile Subscriber Identity) paging, i.e., the paging message does not contain a TMSI (Temporary Mobile Subscriber Identity). In case of luflex operation and paging with IMSI, the BSC/RNC may store the Global CN identity of the CN node that originated the paging, in order to send the paging response to the correct CN node. The serving BSC 24 will, upon reception of the paging from MSC 18, send the paging request to BTSs 28 to 40 in the RRA. It will do it through the Abis interface using the BSAP (Base Station Application Part) protocol to BTSs 28 to 34 for which it is controlling BSC, and through the lur-g interface using RNSAP (Radio Network Subsystem Application Part) protocol to drift BSC 26 for BTSs 36 through 40 controlled by the drift BSC (step 2 in Fig. 2).

MS 16 will respond to the paging by sending a Cell Update message to the drift BSC 26 (step 3 in Fig. 2). Drift BSC 26 will forward the Cell Update message to serving BSC 24 (step 4 in Fig. 2). This will trigger relocation. Uplink signaling transfer will be performed between Target BSC 26 and Source BSC 24 (step 5 in Fig. 2). The relocation may include a different SGSN, e.g. SGSN 22. The relocation procedure is started by sending a "Relocation Required" message from SBSC 24 to SGSN 20 (step 6). SBSC 24 is in the present context also named a source BSC. SGSN 20 will forward the relocation request to SGSN 22 controlling drift BSC 24 (step 7). SGSN 22 sends a "Relocation Request" message to drift BSC 24 (step 8), which in this context is also named a target BSC. Target BSC 24 will respond by sending a "Relocation Request Acknowledge" message after establishing radio access bearers (step 9). This message will be forwarded from SGSN 22 to SGSN 20 (step 10), which in turn sends a "Relocation Command" message to SBSC 24 (step 11).

Source BSC 24 will start forwarding data for radio access bearers to the target BSC 26. The data may alternatively be transferred as duplicate using the lu interface, i.e., routed through the core network nodes 20 and 22. Source BSC 24 will continue receiving uplink data and transmitting duplicates of downlink data (step 12).

After the start of forwarding data, and possibly while continuing this working on this step, source BSC 24 will send a "Relocation commit" message to target BSC 26. This will trigger the execution of the relocation of the serving BSC from source BSC 24 to target BSC 26. In this message SRNS contexts will be forwarded using the "Forward SRNS Context" message and the RANSAP protocol to target BSC 24 (step 13).

According to the present embodiment of the method of the invention, source BSC 24 will in this step also transmit the CN node identity (id) of MSC 18 originating the paging request, along with the SRNS contexts. The id may be an additional parameter of the SRNS context message. The CN node id parameter may be a Network Resource Identifier (NRI), which identifies uniquely an individual CN node out of all CN nodes, which serve in parallel a pool-area.

According to an alternative embodiment of the method of the invention, source BSC 24 will in step 6 transmit the CN node id of MSC 18 originating the paging request, along with the "Relocation Required" Message using the RANAP protocol to SGSN 22. SGSN 22 will forward the CN node id in step 8 along with or as a parameter of the "Relocation Request" Message to target BSC 26.

Target BSC 26 will send a "Relocation Detect" message to SGSN 22, a "Cell update-Confirm" message to MS 16 and, finally, a "Relocation Complete" message to SGSN 22 (steps 14 to 16). SGSN 22 will forward the Relocation Complete message to SGSN 20, which will acknowledge this (steps 17, 18). In the following, SGSN 20 will release the lu connection to source BSC 24, which will acknowledge by sending an "lu release complete" message back to new SGSN 22 (steps 19, 20).

The mobile station will now be able to respond to the paging request by sending a paging response message to new SBSC 26 (step 21). Since BSC 26 knows the id of MSC 18 the paging response will be forwarded to MSC 18 through the A interface (step 22).

It is noted that the present invention is not restricted to the specific features of the above-preferred embodiment, but can be used in all types of communications networks such as GSM systems including circuit switched or packet switched systems. The invention is of course also applicable to any other communication network effecting mobile or fixed communication. Particularly, the invention is also applicable to pure packet switched networks like the future IP-based networks. Any kind of party's identifier data and party's equipment identifier data may be stored in the database, based on which the correspondence is checked and new entries are added. The preferred embodiment may thus vary within the scope of the attached claims.

## Claims

1. A method for changing a routing path between a first data network (10) and a mobile station (16) attached to a second data network (12,14)
said first data network (10) comprising at least one first network node (18), said second data network comprising at least a second network node (24) and a third network node (26),
said routing path comprising before said change
- said first network node (18),
- said second network node (24) and
- said third network node (26),
said routing path comprising after said change
- said first network node (18), and
- said third network node (26),
said method comprising a step of transferring an information element from said second network node (24) to said third network node (26), wherein said information element comprises an identification element of said first network node (18).

2. A method according to claim 1, wherein said information element is transferred directly from said second network node (24) to said third network node (26).

3. A method according to claim 1, wherein said information element is transferred from said second network node (24) to at least one fourth network node (20) in said first data network (10) and then from said fourth network node (20) to said third network node (26).

4. A method according to claim 1, wherein said information element is transferred from said second network node (24) to at least one fourth network node (20) in said first data network (10), then from said fourth network node (20) to a fifth network node (22) in said first data network, and the from said fifth network node to the third network node (26).

5. A method according to claim 4, wherein said fourth network node (20) in said first data network (10) has a serving-network-node function for said second network node (24) before said change, and said fifth network node (22) in said first data network has a serving-network-node function for said third network node (26) after said change.

6. A method according to claim 4 or 5, wherein said first network node (18) is related to a packet-switched domain of said first network and said fourth network node (20) is related to a circuit-switched domain of said first network (10), or vice versa.

7. A method according to any one of the preceding claims, wherein said second network node (24) has a serving-network-node function in said second data network (12, 14) for said mobile station (16) before said change, and said third network node (26) has said serving-network-node function in said second data network for said mobile station after said change.

8. A method according to claim 7, wherein said third network node (26) has a drift-network-node function before said change.

9. A method according to any one of the preceding claims wherein a plurality of first (18) and/or fourth (20) and/or fifth nodes (22) communicates in parallel with said second network node (24) before said change, and with said third network node (26) after said change.

10. A method according to any one of the preceding claims, comprising a further step of saving said information element or said identification element to a data storage device communicating with said second network node (24) before said step of transferring said information element to said third network node (26).

11. A method according any one of the preceding claims, comprising a further step of saving said information element or said identification element to a data storage device communicating with said third network node (26) after said step of transferring said information element to said third network node.

12. A method according to any one of the preceding claims wherein said second data network (12, 14) is a radio data network

13. A method according to any one of the preceding claims wherein said second data network comprises a GERAN (12) and/or a UTRAN.

14. A method according to the first alternative of claim 13, wherein said second network node (24) is related to said GERAN and said third network node (26) is related to said UTRAN, or vice versa.

15. A method according to any one of claims 2 to 14, wherein said identification element of said first network node (18) is included in a "FORWARD SRNS CONTEXT" message sent from said second network node (24) to said third network node (26).

16. A method according to any one of claims 3 to 15, wherein said identification element of said first network node (18) is included in a "RELOCATION REQUIRED" message transferred from said second network node (24) to said fourth or fifth network node (20,22), respectively, and is further included in a "RELOCATION REQUEST" message transferred from said first or fourth network node (20) or fifth network node (22), respectively, to said third network node (26).

17. A method according to any one of the preceding claims for routing response data answering request data from said mobile station (16) to said first network node (18),
said request data originating at said first network node (18) in said first data network (10),
said request data having been routed along said routing path before said change, said response data being routed along said routing path after said change.

18. A method according to claim 17, wherein the request data comprise a paging request message and the response data comprise a paging response message.

19. A method according to claim 17 or 18, wherein said first network node (18) and said third network node (26) are related in common to a packet-switched network domain or to a circuit-switched network domain.

20. A method according to claim 18 or 19, wherein the paging request message comprises an International Mobile Subscriber Identity (IMSI) of the mobile station.

21. A data network system (12) comprising first data network (10) with at least a first network node (18) and a second data network (12) with at least a second network node (24) and a third network node (26)
- said second network node (24) being adapted to control a connection between a mobile station (16) and said first network node (18), said connection being routed through said second network node (24),
- said third network node (26) communicating with said second network node (24) and said mobile station (16), and being adapted to
either allocate at least one communication channel between said mobile station (16) and said third network node (26) for said connection under the control of said second network node (24),
or, upon a transfer of control data relating to said connection from said second network node (24) to said third network node (26), control said connection independently from said first network node (18), wherein said second network node (24) is additionally adapted to transfer an identification element related to said first network node (18) in said second data network (10) from said second network node (24) to said third network node (26).

22. A data network system according to claim 21, wherein the second network node is adapted to transfer said information element directly to said third network node (26).

23. A data network system according to claim 21 or 22, further comprising a fourth network node (20) in said first data network, wherein said second network node (24) is adapted to transfer said information element to said fourth network node (20) and said fourth network node is adapted to transfer said information element to said third network node (26).

24. A data network system according to claim 23, further comprising a fifth network node (22) in said first data network, wherein said fourth network node (20) is adapted to forward said received identification element to said fifth network node (22), and said fifth network node is adapted to forwarding said identification element to said third network node (26).

25. A data network system according to any one of claims 21 to 24, wherein said second network node communicates with a storage device and is adapted to save said identification element in said storage device.

26. A data network system according to any one of claims 21 to 25, wherein said third network node (26) communicates with a storage device and is adapted to save said identification element in said storage device.

27. A data network system according to any one of claims 21 to 26, wherein said first data network is a core network and said second data network is a radio access network.

28. A data network system according to claim 27, wherein said second data network comprises a GERAN (12) and/or a UTRAN.

29. A data network system according to claim 27, wherein said second network node (24) is related to said GERAN and said third network node (26) is related to said UTRAN, or vice versa.

30. A data network system according to any one of claims 21 to 29, wherein a plurality of first (18) and/or fourth (20) and/or fifth nodes (22) communicates in parallel with said second network node (24) and/or with said third network node (26).

31. A data network system according to any one of claims 21 to 30, wherein said first network node (18) is an MSC, and/or said second and third network nodes each are either a RNC or a BSC, and/or said forth and fifth network nodes are SGSNs.

32. A network device for operation in a radio data network, adapted to
establish, maintain and release a connection between a mobile station attached to the radio data network and a second network device in a second data network, and
transfer control data to a third network device operating in said radio data network, said control data serving to establish or maintain a connection between said mobile station and said second network device,
wherein said network device is additionally adapted to transfer to said third network device an identification element related to said second network device.

## Patentansprüche

1. Verfahren zum Ändern eines Routing-Wegs zwischen einem ersten Datennetzwerk (10) und einer an ein zweites Datennetzwerk (12, 14) angeschlossenen Mobilstation (16),
wobei das erste Datennetzwerk (10) zumindest einen ersten Netzwerkknoten (18) umfasst,
wobei das zweite Datennetzwerk zumindest einen zweiten Netzwerkknoten (24) und einen dritten Netzwerkknoten (26) umfasst,
wobei der Routing-Weg vor der Änderung
- den ersten Netzwerkknoten (18),
- den zweiten Netzwerkknoten (24) und
- den dritten Netzwerkknoten (26) umfasst,
wobei der Routing-Weg nach der Änderung
- den ersten Netzwerkknoten (18) und
- den zweiten Netzwerkknoten (26) umfasst,
wobei das Verfahren einen Übertragungsschritt für ein Informationselement von dem zweiten Netzwerkknoten (24) an den dritten Netzwerkknoten (26) umfasst, wobei das Informationselement ein Kennelement des ersten Netzwerkknotens (18) umfasst.

2. Verfahren nach Anspruch 1, wobei das Informationselement von dem zweiten Netzwerkknoten (24) an den dritten Netzwerkknoten (26) direkt übertragen wird.

3. Verfahren nach Anspruch 1, wobei das Informationselement von dem zweiten Netzwerkknoten (24) an zumindest einen vierten Netzwerkknoten (20) in dem ersten Datennetzwerk (10) und dann von dem vierten Netzwerkknoten (20) an den dritten Netzwerkknoten (26) übertragen wird.

4. Verfahren nach Anspruch 1, wobei das Informationselement von dem zweiten Netzwerknoten (24) an zumindest einen vierten Netzwerkknoten (20) in dem ersten Datennetzwerk (10), dann von dem vierten Netzwerknoten (20) an einen fünften Netzwerkknoten (22) in dem ersten Datennetzwerk, und dann von dem fünften Netzwerkknoten an den dritten Netzwerkknoten (26) übertragen wird.

5. Verfahren nach Anspruch 4, wobei der vierte Netzwerkknoten (20) in dem ersten Datennetzwerk (10) vor der Änderung die Funktion eines bedienenden Netzwerkknotens für den zweiten Netzwerkknoten (24) hat und der fünfte Netzwerkknoten (22) in dem ersten Datennetzwerk nach der Änderung die Funktion eines bedienenden Netzwerkknotens für den dritten Netzwerkknoten (26) hat.

6. Verfahren nach Anspruch 4 oder 5, wobei der erste Netzwerkknoten (18) mit einer paketvermittelten Domäne des ersten Netzwerks in Beziehung steht und der vierte Netzwerkknoten (20) mit einer leitungsvermittelten Domäne des ersten Netzwerks (10) in Beziehung steht, oder umgekehrt.

7. Verfahren nach einem der vorangehenden Ansprüche, wobei der zweite Netzwerkknoten (24) in dem zweiten Datennetzwerk (12, 14) vor der Änderung die Funktion eines bedienenden Netzwerkknotens für die Mobilstation (16) hat und der dritte Netzwerkknoten (26) in dem zweiten Datennetzwerk nach der Änderung die Funktion eines bedienenden Netzwerkknotens für die Mobilstation hat.

8. Verfahren nach Anspruch 7, wobei der dritte Netzwerkknoten (26) vor der Änderung die Funktion eines Driftnetzwerkknotens hat.

9. Verfahren nach einem der vorangehenden Ansprüche, wobei eine Vielzahl von ersten (18) und/oder vierten (20) und/oder fünften Knoten (22) vor der Änderung mit dem zweiten Netzwerkknoten (24) und nach der Änderung mit dem dritten Netzwerkknoten (26) parallel kommuniziert.

10. Verfahren nach einem der vorangehenden Ansprüche, wobei es einen weiteren Speicherschritt für das Informationselement oder das Kennelement in einer Datenspeicherungsvorrichtung umfasst, die vor dem Übertragungsschritt für das Informationselement an den dritten Netzwerkknoten (26) mit dem zweiten Netzwerkknoten (24) kommuniziert.

11. Verfahren nach einem der vorangehenden Ansprüche, wobei es einen weiteren Speicherschritt für das Informationselement oder das Kennelement in einer Datenspeicherungsvorrichtung umfasst, die nach dem Übertragungsschritt für das Informationselement an den dritten Netzwerkknoten mit dem dritten Netzwerkknoten (26) kommuniziert.

12. Verfahren nach einem der vorangehenden Ansprüche, wobei das zweite Datennetzwerk (12, 14) ein Funkdatennetzwerk ist.

13. Verfahren nach einem der vorangehenden Ansprüche, wobei das zweite Datennetzwerk ein GERAN (12) und/oder ein UTRAN umfasst.

14. Verfahren nach der ersten Alternative des Anspruchs 13, wobei der zweite Netzwerkknoten (24) mit dem GERAN in Beziehung steht und der dritte Netzwerkknoten (26) mit dem UTRAN in Beziehung steht, oder umgekehrt.

15. Verfahren nach einem der Ansprüche 2 bis 14, wobei das Kennelement des ersten Netzwerkknotens (18) in einer von dem zweiten Netzwerkknoten (24) an den dritten Netzwerkknoten (26) gesendeten "FORWARD SRNS CONTEXT"-Nachricht enthalten ist.

16. Verfahren nach einem der Ansprüche 3 bis 15, wobei das Kennelement des ersten Netzwerkknotens (18) in einer von dem zweiten Netzwerkknoten (24) an den vierten beziehungsweise an den fünften Netzwerkknoten (20, 22) übertragenen "RELOCATION REQUIRED"-Nachricht enthalten ist und ferner in einer von dem ersten, dem vierten Netzwerkknoten (20) beziehungsweise von dem fünften Netzwerkknoten (22) an den dritten Netzwerkknoten (26) übertragenen "RELOCATION REQUEST"-Nachricht enthalten ist.

17. Verfahren nach einem der vorangehenden Ansprüche zum Routing von Antwortdaten, die auf Anforderungsdaten von der Mobilstation (16) an den ersten Netzwerkknoten (18) antworten,
wobei die Anforderungsdaten an dem ersten Netzwerkknoten (18) in dem ersten Datennetzwerk (10) entstehen,
wobei die Anforderungsdaten vor der Änderung entlang des Routing-Wegs weitergeleitet wurden, wobei die Antwortdaten nach der Änderung entlang des Routing-Wegs weitergeleitet werden.

18. Verfahren nach Anspruch 17, wobei die Anforderungsdaten eine Funkrufanforderungsnachricht umfassen und die Antwortdaten eine Funkrufantwortnachricht umfassen.

19. Verfahren nach Anspruch 17 oder 18, wobei der erste Netzwerkknoten (18) und der dritte Netzwerkknoten (26) gemeinsam mit einer paketvermittelten Netzwerkdomäne oder mit einer leitungsvermittelten Netzwerkdomäne in Beziehung stehen.

20. Verfahren nach Anspruch 18 oder 19, wobei die Funkrufanforderungsnachricht eine International Mobile Subscriber Identity (IMSI) der Mobilstation umfasst.

21. Datennetzwerksystem (12), umfassend ein erstes Datennetzwerk (10) mit zumindest einem ersten Netzwerkknoten (18) und ein zweites Datennetzwerk (12) mit zumindest einem zweiten Netzwerkknoten (24) und einem dritten Netzwerkknoten (26), wobei
- der zweite Netzwerkknoten (24) angepasst ist, eine Verbindung zwischen einer Mobilstation (16) und dem ersten Netzwerkknoten (18) zu steuern, wobei die Verbindung durch den zweiten Netzwerkknoten (24) weitergeleitet wird,
- der dritte Netzwerkknoten (26) mit dem zweiten Netzwerkknoten (24) und der Mobilstation (16) kommuniziert und angepasst ist
entweder der Verbindung zumindest einen Kommunikationskanal zwischen der Mobilstation (16) und dem dritten Netzwerkknoten (26) unter der Steuerung des zweiten Netzwerkknotens (24) zuzuordnen,
oder nach einer Übertragung von mit der Verbindung in Beziehung stehenden Steuerungsdaten von dem zweiten Netzwerkknoten (24) an den dritten Netzwerkknoten (26) die Verbindung unabhängig von dem ersten Netzwerkknoten (18) zu steuern, wobei der zweite Netzwerkknoten (24) zusätzlich angepasst ist, ein mit dem ersten Netzwerkknoten (18) in dem zweiten Datennetzwerk (10) in Beziehung stehendes Kennelement von dem zweiten Netzwerkknoten (24) an den dritten Netzwerkknoten (26) zu übertragen.

22. Datennetzwerksystem nach Anspruch 21, wobei der zweite Netzwerkknoten angepasst ist, das Informationselement direkt an den dritten Netzwerkknoten (26) zu übertragen.

23. Datennetzwerksystem nach Anspruch 21 oder 22, wobei es weiter einen vierten Netzwerkknoten (20) in dem ersten Datennetzwerk umfasst, wobei der zweite Netzwerkknoten (24) angepasst ist, das Informationselement an den vierten Netzwerkknoten (20) zu übertragen, und der vierte Netzwerkknoten angepasst ist, das Informationselement an den dritten Netzwerkknoten (26) zu übertragen.

24. Datennetzwerksystem nach Anspruch 23, wobei es weitereinen fünften Netzwerkknoten (22) in dem ersten Datennetzwerk umfasst, wobei der vierte Netzwerkknoten (20) angepasst ist, das empfangene Kennelement an den fünften Netzwerkknoten (22) weiterzuleiten, und der fünfte Netzwerkknoten angepasst ist, das Kennelement an den dritten Netzwerkknoten (26) weiterzuleiten.

25. Datennetzwerksystem nach einem der Ansprüche 21 bis 24, wobei der zweite Netzwerkknoten mit einer Speichervorrichtung kommuniziert und angepasst ist, das Kennelement in der Speicherungsvorrichtung zu speichern.

26. Datennetzwerksystem nach einem der Ansprüche 21 bis 25, wobei der dritte Netzwerkknoten (26) mit einer Speichervorrichtung kommuniziert und angepasst ist, das Kennelement in der Speichervorrichtung zu speichern.

27. Datennetzwerksystem nach einem der Ansprüche 21 bis 26, wobei das erste Datennetzwerk ein Kernnetzwerk ist und das zweite Datennetzwerk ein Funkzugriffsnetzwerk ist.

28. Datennetzwerksystem nach Anspruch 27, wobei das zweite Datennetzwerk ein GERAN (12) und/oder ein UTRAN umfasst.

29. Datennetzwerksystem nach Anspruch 27, wobei der zweite Netzwerkknoten (24) mit dem GERAN in Beziehung steht und der dritte Netzwerkknoten (26) mit dem UTRAN in Beziehung steht, oder umgekehrt.

30. Datennetzwerksystem nach einem der Ansprüche 21 bis 29, wobei eine Vielzahl von ersten (18) und/oder vierten (20) und/oder fünften Knoten (22) mit dem zweiten Netzwerkknoten (24) und/oder mit dem dritten Netzwerkknoten (26) parallel kommuniziert.

31. Datennetzwerksystem nach einem der Ansprüche 21 bis 30, wobei der erste Netzwerkknoten (18) eine MSC ist und/oder der zweite und der dritte Netzwerkknoten jeweils entweder eine RNC oder eine BSC sind , und/oder der vierte und der fünfte Netzwerkknoten SGSNs sind.

32. Netzwerkvorrichtung zum Betrieb in einem Funkdatennetzwerk, wobei sie angepasst ist,
eine Verbindung zwischen einer an das Funkdatennetzwerk angeschlossenen Mobilstation und einer zweiten Netzwerkvorrichtung in einem zweiten Datennetzwerk aufzubauen, aufrechtzuerhalten und freizugeben, und
Steuerdaten an eine dritte in dem Funkdatennetzwerk betriebene Netzwerkvorrichtung zu übertragen, wobei die Steuerdaten dazu dienen, eine Verbindung zwischen der Mobilstation und der zweiten Netzwerkvorrichtung aufzubauen und aufrechtzuerhalten,
wobei die Netzwerkvorrichtung zusätzlich angepasst ist, ein mit der zweiten Netzwerkvorrichtung in Beziehung stehendes Kennelement an die dritte Netzwerkvorrichtung zu übertragen.

## Revendications

1. Procédé pour changer un trajet de routage entre un premier réseau de données (10) et une station mobile (16) rattachée à un second réseau de données (12, 14),
ledit premier réseau de données (10) comprenant au moins un premier noeud de réseau (18), ledit second réseau de données comprenant au moins un deuxième noeud de réseau (24) et un troisième noeud de réseau (26),
ledit trajet de routage comprenant avant ledit changement
- ledit premier noeud de réseau (18),
- ledit deuxième noeud de réseau (24) et
- ledit troisième noeud de réseau (26),
ledit trajet de routage comprenant après ledit changement
- ledit premier noeud de réseau (18), et
- ledit troisième noeud de réseau (26),
ledit procédé comprenant une étape consistant à transférer un élément d'information dudit deuxième noeud de réseau (24) audit troisième noeud de réseau (26), dans lequel ledit élément d'information comprend un élément d'identification dudit premier noeud de réseau (18).

2. Procédé selon la revendication 1, dans lequel ledit élément d'information est transféré directement dudit deuxième noeud de réseau (24) audit troisième noeud de réseau (26).

3. Procédé selon la revendication 1, dans lequel ledit élément d'information est transféré dudit deuxième noeud de réseau (24) à au moins un quatrième noeud de réseau (20) dans ledit premier réseau de données (10) et ensuite dudit quatrième noeud de réseau (20) audit troisième noeud de réseau (26).

4. Procédé selon la revendication 1, dans lequel ledit élément d'information est transféré dudit deuxième noeud de réseau (24) à au moins un quatrième noeud de réseau (20) dans ledit premier réseau de données (10), ensuite dudit quatrième noeud de réseau (20) à un cinquième noeud de réseau (22) dans ledit premier réseau de données, et ensuite dudit cinquième noeud de réseau au troisième noeud de réseau (26).

5. Procédé selon la revendication 4, dans lequel ledit quatrième noeud de réseau (20) dans ledit premier réseau de données (10) a une fonction de noeud de réseau de desserte pour ledit deuxième noeud de réseau (24) avant ledit changement, et ledit cinquième noeud de réseau (22) dans ledit premier réseau de données a une fonction de noeud de réseau de desserte pour ledit troisième noeud de réseau (26) après ledit changement.

6. Procédé selon la revendication 4 ou 5, dans lequel ledit premier noeud de réseau (18) est lié à un domaine à commutation de paquets dudit premier réseau et ledit quatrième noeud de réseau (20) est lié à un domaine à commutation de circuits dudit premier réseau (10), ou vice versa.

7. Procédé selon l'une quelconque des revendications précédentes, dans lequel ledit deuxième noeud de réseau (24) a une fonction de noeud de réseau de desserte dans ledit second réseau de données (12, 14) pour ladite station mobile (16) avant ledit changement, et ledit troisième noeud de réseau (26) a ladite fonction de noeud de réseau de desserte dans ledit second réseau de données pour ladite station mobile après ledit changement.

8. Procédé selon la revendication 7, dans lequel ledit troisième noeud de réseau (26) a une fonction de noeud de réseau de transport (drift) avant ledit changement.

9. Procédé selon l'une quelconque des revendications précédentes, dans lequel une pluralité des premier (18) et/ou quatrième (20) et/ou cinquième noeuds (22) communique en parallèle avec ledit deuxième noeud de réseau (24) avant ledit changement, et avec ledit troisième noeud de réseau (26) après ledit changement.

10. Procédé selon l'une quelconque des revendications précédentes, comprenant une autre étape consistant à sauvegarder ledit élément d'information ou ledit élément d'identification vers un dispositif de stockage de données communiquant avec ledit deuxième noeud de réseau (24) avant ladite étape consistant à transférer ledit élément d'information audit troisième noeud de réseau (26).

11. Procédé selon l'une quelconque des revendications précédentes, comprenant une autre étape consistant à sauvegarder ledit élément d'information ou ledit élément d'identification vers un dispositif de stockage de données communiquant avec ledit troisième noeud de réseau (26) après ladite étape consistant à transférer ledit élément d'information audit troisième noeud de réseau.

12. Procédé selon l'une quelconque des revendications précédentes, dans lequel ledit second réseau de données (12, 14) est un réseau de données radio.

13. Procédé selon l'une quelconque des revendications précédentes, dans lequel ledit second réseau de données comprend un GERAN (12) et/ou un UTRAN.

14. Procédé selon la première alternative de la revendication 13, dans lequel ledit deuxième noeud de réseau (24) est lié audit GERAN et ledit troisième noeud de réseau (26) est lié audit UTRAN, ou vice versa.

15. Procédé selon l'une quelconque des revendications 2 à 14, dans lequel ledit élément d'identification dudit premier noeud de réseau (18) est inclus dans un message « TRANSFERT CONTEXTE SRNS » envoyé dudit deuxième noeud de réseau (24) audit troisième noeud de réseau (26).

16. Procédé selon l'une quelconque des revendications 3 à 15, dans lequel ledit élément d'identification dudit premier noeud de réseau (18) est inclus dans un message « RELOCALISATION REQUISE » transféré dudit deuxième noeud de réseau (24) audit quatrième ou cinquième noeud de réseau (20, 22), respectivement, et est en outre inclus dans un message « DEMANDE DE RELOCALISATION » transféré dudit premier ou quatrième noeud de réseau (20) ou cinquième noeud de réseau (22), respectivement, audit troisième noeud de réseau (26).

17. Procédé selon l'une quelconque des revendications précédentes pour acheminer des données de réponse répondant aux données de demande de ladite station mobile (16) audit premier noeud de réseau (18),
lesdites données de demande ayant pour origine ledit premier noeud de réseau (18) dans ledit premier réseau de données (10),
lesdites données de demande étant acheminées le long dudit trajet de routage avant ledit changement, lesdites données de réponse étant acheminées le long dudit trajet de routage après ledit changement.

18. Procédé selon la revendication 17, dans lequel les données de demande comprennent un message de demande de recherche de personnes et les données de réponse comprennent un message de réponse de recherche de personnes.

19. Procédé selon la revendication 17 ou 18, dans lequel ledit premier noeud de réseau (18) et ledit troisième noeud de réseau (26) sont liés en commun à un domaine de réseau à commutation de paquets ou à un domaine de réseau à commutation de circuits.

20. Procédé selon la revendication 18 ou 19, dans lequel le message de demande de recherche de personnes comprend une identité internationale de l'abonné mobile (IMSI) de la station mobile.

21. Système de réseau de données (12) comprenant un premier réseau de données (10) avec au moins un premier noeud de réseau (18) et un second réseau de données (12) avec au moins un deuxième noeud de réseau (24) et un troisième noeud de réseau (26),
- ledit deuxième noeud de réseau (24) étant adapté pour contrôler une connexion entre une station mobile (16) et ledit premier noeud de réseau (18), ladite connexion étant acheminée par l'intermédiaire dudit deuxième noeud de réseau (24),
- ledit troisième noeud de réseau (26) communiquant avec ledit deuxième noeud de réseau (24) et ladite station mobile (16), et étant adapté pour
soit allouer au moins un canal de communication entre ladite station mobile (16) et ledit troisième noeud de réseau (26) pour ladite connexion sous le contrôle dudit deuxième noeud de réseau (24),
soit, lors d'un transfert de données de contrôle relatives à ladite connexion dudit deuxième noeud de réseau (24) audit troisième noeud de réseau (26), contrôler ladite connexion indépendamment depuis ledit premier noeud de réseau (18),
dans lequel ledit deuxième noeud de réseau (24) est en outre adapté pour transférer un élément d'identification lié audit premier noeud de réseau (18) dans ledit second réseau de données (10) dudit deuxième noeud de réseau (24) audit troisième noeud de réseau (26).

22. Système de réseau de données selon la revendication 21, dans lequel le deuxième noeud de réseau est adapté pour transférer ledit élément d'information directement audit troisième noeud de réseau (26).

23. Système de réseau de données selon la revendication 21 ou 22, comprenant en outre un quatrième noeud de réseau (20) dans ledit premier réseau de données, dans lequel ledit deuxième noeud de réseau (24) est adapté pour transférer ledit élément d'information audit quatrième noeud de réseau (20) et ledit quatrième noeud de réseau est adapté pour transférer ledit élément d'information audit troisième noeud de réseau (26).

24. Système de réseau de données selon la revendication 23, comprenant en outre un cinquième noeud de réseau (22) dans ledit premier réseau de données, dans lequel ledit quatrième noeud de réseau (20) est adapté pour transférer ledit élément d'identification reçu audit cinquième noeud de réseau (22), et ledit cinquième noeud de réseau est adapté pour transférer ledit élément d'identification audit troisième noeud de réseau (26).

25. Système de réseau de données selon l'une quelconque des revendications 21 à 24, dans lequel ledit deuxième noeud de réseau communique avec un dispositif de stockage et est adapté pour sauvegarder ledit élément d'identification dans ledit dispositif de stockage.

26. Système de réseau de données selon l'une quelconque des revendications 21 à 25, dans lequel ledit troisième noeud de réseau (26) communique avec un dispositif de stockage et est adapté pour sauvegarder ledit élément d'identification dans ledit dispositif de stockage.

27. Système de réseau de données selon l'une quelconque des revendications 21 à 26, dans lequel ledit premier réseau de données est un réseau d'infrastructure et ledit second réseau de données est un réseau d'accès radio.

28. Système de réseau de données selon la revendication 27, dans lequel ledit second réseau de données comprend un GERAN (12) et/ou un UTRAN.

29. Système de réseau de données selon la revendication 27, dans lequel ledit deuxième noeud de réseau (24) est lié audit GERAN et ledit troisième noeud de réseau (26) est lié audit UTRAN, ou vice versa.

30. Système de réseau de données selon l'une quelconque des revendications 21 à 29, dans lequel une pluralité des premier (18) et/ou quatrième (20) et/ou cinquième noeuds (22) communique en parallèle avec ledit deuxième noeud de réseau (24) et/ou avec ledit troisième noeud de réseau (26).

31. Système de réseau de données selon l'une quelconque des revendications 21 à 30, dans lequel ledit premier noeud de réseau (18) est un MSC, et/ou lesdits deuxième et troisième noeuds de réseau sont chacun soit un RNC soit un BSC, et/ou lesdits quatrième et cinquième noeuds de réseau sont des SGSNs.

32. Dispositif de réseau pour l'exploitation dans un réseau de données radio, adapté pour
établir, maintenir et libérer une connexion entre une station mobile rattachée au réseau de données radio et un deuxième dispositif de réseau dans un second réseau de données, et
transférer des données de contrôle à un troisième dispositif de réseau fonctionnant dans ledit réseau de données radio, lesdites données de contrôle servant à établir ou maintenir une connexion entre ladite station mobile et ledit deuxième dispositif de réseau,
dans lequel ledit dispositif de réseau est en outre adapté pour transférer audit troisième dispositif de réseau un élément d'identification lié audit deuxième dispositif de réseau.
